# EUROPÄISCHE PATENTANMELDUNG

(11) **EP 3 147 173 A1**
(43) Veröffentlichungstag der Anmeldung: **29.03.2017**
(21) Anmeldenummer: 16184751.2
(22) Anmeldetag: 18.08.2016
(51) Int. Cl.: B61H 13/04, F16D 7/06

(54) **HANDBREMSE FÜR EINEN BAHNWAGEN**

(30) Priorität: 26.08.2015 DE 102015010975
(71) Anmelder: Waggonbau Graaff GmbH, 31008 Elze (DE)
(72) Erfinder: Feiler, Ludmilla, 30890 Barsinghausen (DE); Pana, Constanin, 31008 Elze (DE)
(74) Vertreter: Bremer, Ulrich

(57) **Zusammenfassung**

Die Erfindung betrifft Handbremse (1) für einen Bahnwagen (8) bestehend aus einem Bedienelement auf einer Achse (9), einem Getriebe (30), einer Bremsspindel (3) mit einer Bremsspindelmutter (7), einem Lager (19) einem Übertragungselement und Bremsbacken wobei zwischen dem Bedienelement und der Bremsspindel (3) eine einstellbare Drehmomentkupplung (4) angeordnet ist.

Die erfindungsgemäße Lösung hat den Vorteil, dass die Sicherheit im Schienenverkehr durch ausreichendes und definiertes Anziehen der Handbremse erhöht wird und gewährleistet ist, dass die Handbremse in ihrer Endstellung verriegelt ist. Weiterhin ist für das Bedienpersonal durch die Anzeigevorrichtung klar ersichtlich ob die Bremse verriegelt ist oder nicht.

## Beschreibung

Die Erfindung betrifft eine Handbremse für einen Bahnwagen entsprechend den Merkmalen des Oberbegriffes des ersten Patentanspruches.

Die erfindungsgemäße Lösung ist für jede Art von Handbremsen an einem Güterwagen einsetzbar.
Die erfindungsgemäße Handbremse mit einstellbarer mechanischer Drehmomentkupplung und Anzeigevorrichtung ist konzipiert zur Ausrüstung von Güterwagen und dient:
- zum kontrollierten Anziehen der Handbremse
- zur Verriegelung und
- zur Anzeige des Zustandes "AUF"-"ZU" der Handbremse

Durch das kontrollierte Anziehen der Handbremse wird gewährleistet, dass diese ausreichend angezogen ist und sich nicht selbsttätig löst.

Die Handbremse an dem Güterwagen dient zum Feststellen der Bremsbacken gegenüber den Rädern, so dass diese fixiert sind und wird von dem Bediener nach seinem persönlichen Ermessen angezogen. Sie können als Feststellbremse, Spindelbremse, Spindelfeststellbremse, Spindelhandbremse, Spindelfeststellbremse oder ähnlich bezeichnet werden und an unterschiedlichen Orten des Wagens angeordnet sein, wie unterhalb des Tragrahmens (bodenbedienbare Bremse) oder an einem Übergangssteg.
Übliche Handbremsen an Bahnwagen sind mit der erfindungsgemäßen Bremse nachrüstbar. Jede Handbremse weist ein Handrad, einem Hebel oder eine Kurbel auf einer Achse auf, ein Getriebe zum Verstärken oder Umlenken der Kraft, eine Bremsspindel mit einer Bremsspindelmutter oder weitere Übertragungsmechanismen zu den Bremsbacken.

DE 2 120 593 beschreibt beispielsweise eine Bremseinrichtung, insbesondere eine hydraulische Handbremse für Eisenbahnwagen, mit einer in entgegengesetzten Richtungen bedienbaren Handbetätigungsvorrichtungen zum Anlegen und Lösen der Bremsen wobei ein axial angeordneter Bremskrafterzeuger vorhanden ist und eine Stange als Sperrvorrichtung dient.

US 2007 / 0 151 812 A1 beschreibt ein mechanische Handbremse für einen Bahnwagen mit einem Hebel auf einer Achse und ein Getriebe zu einer einstellbaren Kupplung ohne Kugeln auf einer parallel verlaufenden Achse, wobei das Einstellen der Kupplung, gegen den Widerstand einer Federkraft, durch eine Schlitzschraube erfolgt. Schlitzschrauben die mit einem Schraubenzieher zu bedienen sind, sind im robusten Bahnverkehr wenig geeignet.
Eine Kontrolleinrichtung ob diese Handbremse zu fest oder zu locker angezogen ist, ist nicht vorhanden. Das hat den Nachteil einer fehlenden einfachen Kontrolle und dass sich bei einem zu geringem Anziehen der Bremse der Bahnwagen in Bewegung setzen kann, was Unfälle zur Folge haben kann. Zu fest angezogene Bremsen haben wiederum den Nachteil, dass sie nicht von jeder anderen Person problemlos lösbar sind.
Bei angezogener Handbremse eines Bahnwagens ist in der Regel nicht ersichtlich, ob und wie fest diese angezogen ist. Weiterhin ist eine Verriegelung gegen unbeabsichtigtes Lösen der Bremse nicht vorhanden.

Es ist daher Aufgabe der Erfindung eine Handbremse für einen Güterwagen zu entwickeln, die die Nachteile des Standes der Technik nicht aufweist und mit einer vorgegebenen Kraft einfach einstellbar ist, wobei problemlos feststellbar sein soll, ob die Handbremse angezogen oder offen ist. Weiterhin soll ein unbeabsichtigtes Lösen der Handbremse nicht möglich sein.

Diese Aufgabe wird mit einer Handbremse nach den Merkmalen des ersten Patentanspruches gelöst.
Unteransprüche geben vorteilhafte Ausgestaltungen der Erfindung wider.

Die erfindungsgemäße Lösung sieht eine Handbremse für einen Bahnwagen bestehend aus einem Bedienelement auf einer Achse, einem Getriebe, einer Bremsspindel mit einer Bremsspindelmutter, einem Lager, einem Übertragungselement und Bremsbacken vor, bei dem zwischen dem Bedienelement und der Bremsspindel eine einstellbare Drehmomentkupplung angeordnet ist.
Das Bedienelement kann ein Handrad, ein Hebelarm oder eine Kurbel darstellen und am Untergestell des Bahnwagens, an einem Übergangssteg oder am Drehgestell angeordnet sein kann. Von diesem Bedienelement führt eine Achse zum Gehäuse Drehmomentkupplung mit Zahnradübersetzung. Mit den Zahnrädern kann ein Umlenken der Bewegung oder/und eine Übersetzung der Kraft des Bedieners stattfinden.

Da die Achse des Bedienelementes senkrecht zum Bahnwagen und die Bremsspindel längs zum Bahnwagen angeordnet sind erfolgt durch des Getriebe ein Umlenken von Bewegung und Drehmoment.
Das Gehäuse schützt die Zahnräder vor Verschmutzung. Nach der Zahnradübersetzung erfolgt Verbindung zu Drehmomentkupplung.
Zwischen Drehmomentkupplung und Bremsspindel kann eine Anzeigevorrichtung angeordnet sein. Das kann eine mechanische Vorrichtung wie eine Drehscheibe sein, die anzeigt ob die Bremse geschlossen oder geöffnet ist.
Die Funktion einer Drehmomentkupplung ist dem Fachmann grundsätzlich bekannt. Die für die Erfindung vorgesehene Drehmomentkupplung besteht aus einer Antriebsnabe auf einer Antriebswelle und einer Abtriebsnabe auf der Bremsspindel, wobei zwischen der Antriebs- und Abtriebsnabe Kugeln in einem Gehäuse angeordnet sind, durch die das Drehmoment übertragen wird. Eine Tellerfeder wirkt gegen eine Ringmutter, mit der das Drehmoment eingestellt wird, bei dem die Drehmomentkupplung auskoppeln soll. Die zum Einstellen des Drehmomentes dienende Ringmutter ist an der Abtriebsnabe angeordnet. Die Abtriebsnabe ist gegenüber ihrer Achse, der Bremspindel, verschiebbar angeordnet. Das kann durch eine Feder auf der Bremsspindel geschehen die ein Drehmoment von der Abtriebsnabe auf die Bremsspindel überträgt und auf der die Abtriebsnabe längs der Bremsspindel verschiebbar ist. Sobald ein eingestelltes Drehmoment überschritten ist springen die Kugeln aus ihrem Gehäuse, dem Kugelkäfig, so dass keine Kraftübertragung mehr erfolgt, wobei zwischen den Naben ein Abstand entsteht.
Die Antriebsnabe ist fest, wie form-, kraft-oder stoffschlüssig mit der Antriebswelle verbunden, auf deren anderem Ende das Zahnrad angeordnet ist.
Die Anzeigevorrichtung kann aus einer bewegbaren Scheibe an einer feststehenden Anzeigescheibe bestehen, die beide auf einer Achse angeordnet sind. Die bewegliche Scheibe, die eine Drehscheibe darstellt kann von einem Seil bewegt werden, welches mit der Abtriebsnabe verbunden ist. Dadurch ist die Bewegung der Abtriebsnabe auf die Drehscheibe übertragbar.
Zum Verstärken der Bewegung der Abtriebsnabe ist es vorteilhaft zwischen der
Drehmomentkupplung und dem Seil eine Hebelübersetzung anzuordnen. Diese kann mit einem Halter am Untergestell angeordnet sein. Der Halter dient dann der Lagerung des Umlenkhebels. Weiterhin ist es vorteilhaft zwischen der beweglichen Drehscheibe und einem Lager eine Feder anzuordnen, die der Kraft der Abtriebsnabe beim Auskoppeln entgegenwirkt.
An der Drehmomentkupplung ist es vorteilhaft eine Verriegelung anzuordnen. Das kann ein Bolzen sein, der nach Auskoppeln der Vorrichtung ein unbeabsichtigtes wieder ein koppeln verhindert. Die Verriegelung kann zwischen der Antriebs- und der Abtriebsnabe angeordnet sein und beim Sprung der Abtriebsnabe in Richtung Lager der Bremsspindel an einer vorgesehenen Stelle einrasten.
Vorteilhaft ist es, wenn die Anzeigevorrichtung über ein Seil oder einen anderen geeigneten Übertragungsmechanismus mit der Verriegelung verbunden ist.

Das Drehmoment kann je nach Erfordernis mit unterschiedlichem Auslösemoment mittels Schraubenschlüssel an der Ringmutter eingestellt werden, so dass die Drehmomentkupplung wie vorgesehen auslöst.
Ist beim Anziehen der Handbremse das eingestellte Drehmoment erreicht, wird die Handbremse über den Verriegelungsbolzen verriegelt. Dieser kann durch eine Öffnung wie ein Loch geschoben werden und die Antriebs- und die Abtriebsnabe miteinander verriegeln.
Die an der Drehmomentkupplung angeschlossene Anzeigevorrichtung kann beidseitig des Wagens angeordnet sein, so dass ohne ein Überqueren der Gleise von beiden Seiten des Wagens lesbar ist, dass die Handbremse ausreichend angezogen und verriegelt ist.
Durch die Vorrichtung wird vermieden, dass die Handbremse zu schwach angezogen wird und sich lösen kann und nicht erkennbar ist in welchem Schaltzustand sich die Bremse befindet. Zum Lösen der Handbremse wird über eine Betätigung (Seil) die Verriegelung gelöst. Danach kann das Handrad der Handbremse gedreht werden. Dabei wird die Bremse gelöst. Beim Lösen muss der Bediener das Handrad komplett ausdrehen, dadurch springt die Drehmomentkupplung in die Ausgangslage. Dabei wird die Drehscheibe in die lesbare Position "AUF" gedreht.
Die erfindungsgemäße Lösung hat den Vorteil, dass die Sicherheit im Schienenverkehr durch ausreichendes und definiertes Anziehen der Handbremse erhöht wird und gewährleistet ist, dass die Handbremse in ihrer Endstellung verriegelt ist. Weiterhin ist für das Bedienpersonal durch die Anzeigevorrichtung klar ersichtlich ob die Bremse verriegelt ist oder nicht.

Im Folgenden wird die Erfindung an einem Ausführungsbeispiel und fünf Figuren näher erläutert. Die Figuren zeigen.
Figur 1: Darstellung der erfindungsgemäßen Handbremse im Prinzip
Figur 2: Handbremse an einem Bahnwagen
Figur 3:Ausschnitt von Figur 2 in Schnittdarstellung
Figur 4: Anzeigevorrichtung an der Drehmomentkupplung im Detail
Figur 5: Anzeigevorrichtung von Figur 4 in Ansicht von oben
Figur 6: Detaildarstellung der Kupplung aus Figur 3

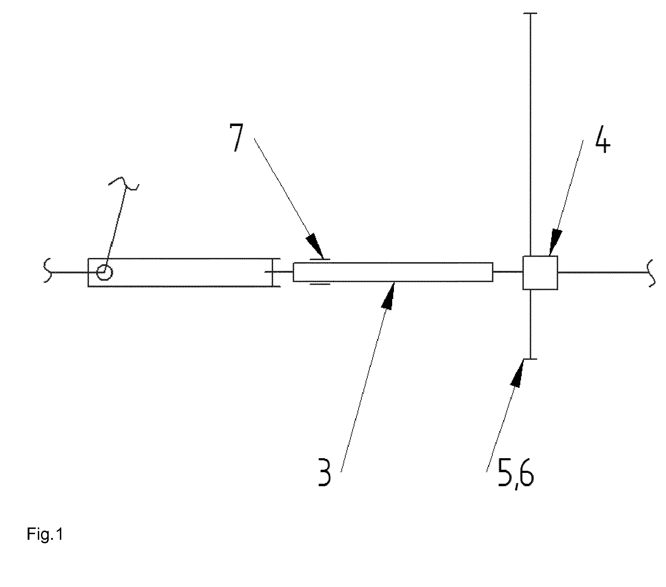

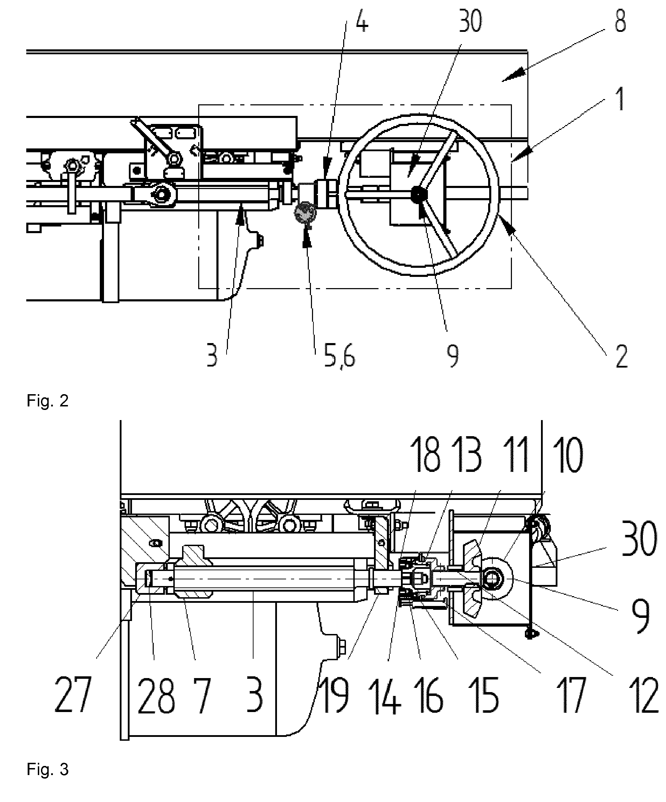

Die Figur 1 zeigt die erfindungsgemäße Handbremse 1 als Prinzipdarstellung, bestehend aus der Drehmomentkupplung 4, deren Drehmoment einstellbar ist, der Anzeigevorrichtung 5 und der Verriegelung 6. Weiterhin sind die Bremsspindel 3 und die Bremsspindelmutter 7 gezeigt. Die Figur 2 zeigt die Handbremse 1 am Untergestell eines Bahnwagens 8 mit dem Handrad 2, einem Gehäuse 30 für die Zahnräder 10,11, der Drehmomentkupplung 4, der Anzeigevorrichtung 5, der Verriegelung 6 und der Bremsspindel 3 mit der Bremsspindelmutter 7. Das Handrad 2 ist auf einer Achse 9 senkrecht zum Bahnwagen 8 angeordnet. Die Bremsspindel 3 die sich zwischen Bremse und der Drehmomentkupplung 4 befindet ist parallel zur Längsseite des Bahnwagens 8 angeordnet. Um das Moment und die Drehbewegung der Bedieners am Handrad 2 umzuleiten sind Kegelzahnräder im Gehäuse 30 angeordnet.
Die Figur 3 zeigt einen Ausschnitt von Figur 2 in einer Schnittdarstellung. Die mit dem Handrad 2 (nicht gezeigt) erzeugte Drehbewegung wird mittels Achse 9 über die Zahnräder 10,11 im Gehäuse 30 auf die Antriebsnabe 13 übertragen, die fest mit der Antriebswelle 12 verbunden ist. Die Antriebsnabe 13 ist Bestandteil der hier dargestellten Drehmomentkupplung 4, die weiterhin aus einer Abtriebsnabe 14 auf der Bremsspindel 3 besteht. Die Abtriebsnabe 14 ist entlang der Längsachse der Bremsspindel 3 verschiebbar und geeignet ein Drehmoment zu übertragen. Dazu ist sie mittels Feder in einer Nut verschiebbar befestigt. Das Drehmoment ist mittels Ringmutter 18 auf der Abtriebsnabe14 einstellbar. Die Ringmutter 18 weist Angriffsflächen für einen Schraubenschlüssel auf. Durch das Auf- und Zudrehen der Ringmutter 18 ändert sich der Abstand zwischen dieser und der Tellerfeder 16, so dass verschiedene Auslösemomente der Drehmomentkupplung einstellbar sind. Zwischen der Antriebs- und Abtriebsnabe 13, 14 sind Kugeln 15 in einem Gehäuse und eine Tellerfeder 16 angeordnet, wobei die Tellerfeder 16 gegen die Kugeln 15 und die Ringmutter 18 wirkt.
Die Kugeln 15 übertragen das Drehmoment von der Antriebsnabe 13 auf die Abtriebsnabe 15, die mit der Bremsspindel 3 verbunden ist. Die Bremsspindel 3 weist ein Gewinde auf, auf dem die Bremsspindelmutter 7 durch die Drehbewegung der Bremsspindel 3 die Bremsen des Bahnwagens festzieht oder löst. An der Drehmomentkupplung 4 ist eine Verriegelung 6 angeordnet, die mit dem Verriegelungsbolzen 17 gegen die Antriebsnabe 13 und die Abtriebsnabe 14 der Drehmomentkupplung 4 wirkt.
Die Bremsspindel 3 ist auf ihrer eine Seite in einem Lager 19 angeordnet und auf ihrer anderen Seite in dem Stützlager 27 mit der Spurlinse 28. Die Bremsspindel 3 dient der Übertragung der Drehbewegung auf die Bremsspindelmutter 7 mit der die Kraft des Handrades 2 auf die Bremsen des Bahnwagens übertragen wird. Solange die Drehmomentkupplung 4 geschlossen ist kann die Bremse des Bahnwagens 8 fester angezogen werden. Sobald eine, durch das Anziehen der Ringmutter 18 vorgegebene Kraft, überschritten wird, koppelt die Drehmomentkupplung 4 aus und das Handrad 2 läuft ohne Widerstand. Dann ist ein weiteres Feststellen der Bremse nicht mehr möglich. Gleichzeitig erfolgt ein Verriegeln der Drehmomentkupplung 4 durch die Verriegelung 6.

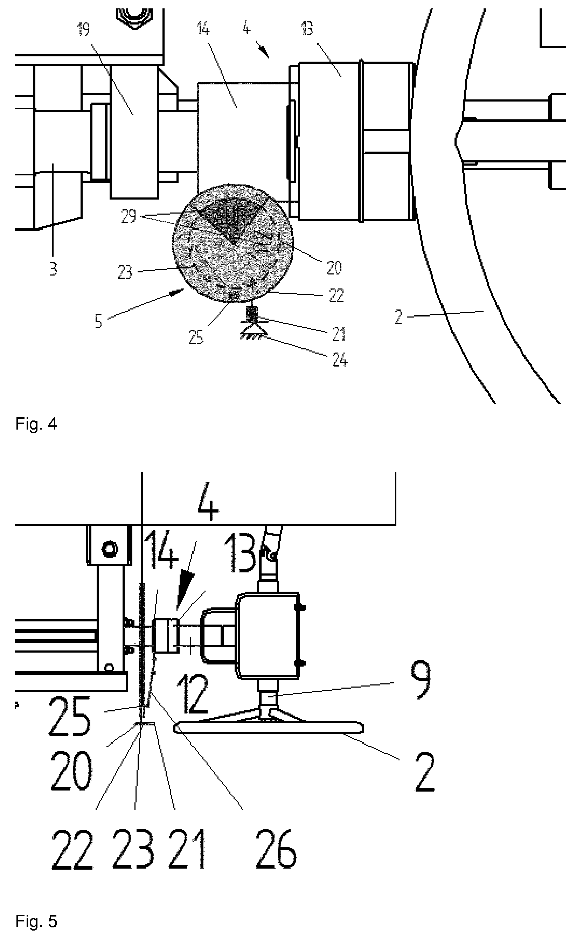

Die Figur 4 zeigt die Anzeigevorrichtung 5 an der Drehmomentkupplung 4 im Detail. Die Anzeigevorrichtung 5 ist auf einer Achse senkrecht zur Längsseite des Bahnwagens 8 im Bereich der Drehmomentkupplung 4 an der Abtriebsnabe 14 angeordnet und besteht aus zwei Scheiben 20, 22. Auf der Drehscheibe 20 ist die Anzeige aufgebracht. Das kann eine Farbe wie Rot oder Grün sein oder/und die Wörter: "AUF" und "ZU". Die Drehscheibe 20 ist gegenüber der feststehenden Scheibe 22 verdrehbar. Das Verdrehen erfolgt über das Seil 23, welches an der Seilführung 20 mit der Scheibe 20 verbunden ist. Weiterhin ist die Feder 21 zwischen der Scheibe 20 und einem Lager 24 angeordnet, gegen deren Widerstand die Drehscheibe 20 beim Schließen und Verriegeln der Bremse verdreht wird. Nach diesem Schließen ist die Feder 21 gespannt und die Drehscheibe 20 auf die Anzeige "ZU" gesprungen.
Wie die Anzeigevorrichtung 5 mit der Abtriebsnabe 14 verbunden ist zeigt die Figur 5, die eine Ansicht von oben auf die Vorrichtung darstellt. Die Drehscheibe 20, die sich in Blickrichtung hinter der feststehenden Scheibe 22 befindet, ist mit einem Hebel 26 verbunden, der an der Abtriebsnabe 14 befestigt ist. Sobald ein vorgegebenes Drehmoment überschritten ist springen die Kugeln 15 im Gehäuse zwischen der Antriebs- und der Abtriebsnabe 13,14 der Drehmomentkupplung 4 aus ihrer Lage wobei sich die Abtriebsnabe 14 einen Sprung entlang der Bremsspindel 3 bewegt. Diese Bewegung wird über den Hebel 26 auf den Seilzug 23 übertragen, wodurch die Drehscheibe 20 sprungartig von der Stellung "AUF", auf die Anzeige "ZU" gestellt wird. Gleichzeitig wird der Verriegelungsbolzen 17 der Verriegelung 6 in die Verriegelungsstellung gebracht, so dass Drehmomentkupplung 4 und damit die Bremse verriegelt ist.
Die Abtriebsnabe 14 ist in dieser Stellung mittels Verriegelungsbolzen 17 verriegelt, was auf der Anzeigeeinrichtung abzulesen ist. Zum Lösen der Bremse 1 wird über eine Betätigung, die ein Seil darstellt, die Verriegelung 6 durch Entfernen des Verriegelungsbolzens 17 gelöst, so dass das Handrad 2 in die andere Richtung gedreht werden kann, so dass Antriebsnabe 13 und Abtriebsnabe 14 durch die Kraft der Tellerfeder 16 auseinandergedrückt werden und die Kugeln15 wieder in die Nabe 13,14 zurückspringen und die Abtriebsnabe 14 einen Sprung in Richtung auf die Antriebsnabe 13 vollzieht. Dadurch wird der Hebel 26 entspannt und die gespannte Feder 21 zieht die bewegliche Drehscheibe 20 in die Position "AUF".

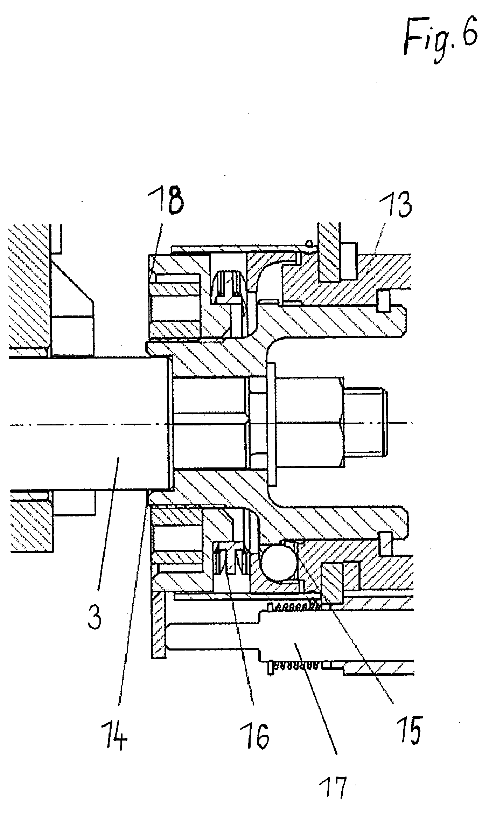

Die Figur 6 zeigt die Kupplung aus der Figur 3 die eine Durchrastkupplung darstellt in einer Detaildarstellung. Es handelt sich dabei um Kugel-Rast-Kupplung bestehend aus der Antriebsnabe 13, die gegen die Abtriebsnabe 14 mit der Bremsspindel 3 wirkt, wobei die Ringmutter 18 in der Abtriebsnabe 14 gegen die Tellerfeder 16 und den Käfig der Kugeln 15 wirkt, so dass das Auslösemoment der Kupplung einstellbar ist. Weiterhin ist der Verriegelungsbolzen 17 mit seiner Feder gezeigt, der die Antriebsnabe 13 und die Abtriebsnabe 14 gegeneinander verriegelt, so dass das Handrad 2 nicht mehr bewegt werden kann.

### Liste der verwendeten Bezugszeichen

- 1: Handbremse
- 2: Handrad
- 3: Bremsspindel
- 4: Drehmomentkupplung, einstellbar
- 5: Anzeigevorrichtung
- 6: Verriegelung
- 7: Bremsspindelmutter
- 8: Bahnwagen
- 9: Achse des Handrades
- 10: Zahnrad der Achse 9
- 11: Zahnrad der Antriebswelle
- 12: Antriebswelle
- 13: Antriebsnabe
- 14: Abtriebsnabe
- 15: Kugel
- 16: Tellerfeder
- 17: Verriegelungsbolzen
- 18: Ringmutter
- 19: Lager von 3
- 20: Drehscheibe
- 21: Feder von 20
- 22: Scheibe feststehend mit Ausschnitt für Anzeige
- 23: Seil
- 24: Lager von 21
- 25: Seilführung
- 26: Hebel für Übersetzung
- 27: Stützlager
- 28: Spurlinse
- 29: Anzeige
- 30: Gehäuse

## Patentansprüche

1. Handbremse (1) für einen Bahnwagen (8) bestehend aus einem Bedienelement auf einer Achse (9), einem Getriebe, einer Bremsspindel (3) mit einer Bremsspindelmutter (7), einem Lager (19) einem Übertragungselement und Bremsbacken, wobei zwischen dem Bedienelement und der Bremsspindel (3) eine einstellbare Drehmomentkupplung (4) angeordnet ist, **dadurch gekennzeichnet, dass** die einstellbare Drehmomentkupplung (4) aus einer Antriebsnabe (13) auf einer Antriebswelle (12) und einer Abtriebsnabe (14) auf einer Bremsspindel (3) besteht, wobei zwischen Antriebs - (13) und Abtriebsnabe (14) Kugeln (15) und eine Tellerfeder (16) angeordnet sind.

2. Vorrichtung nach Anspruch 1, **dadurch gekennzeichnet, dass** das Bedienelement ein Handrad (2), einen Hebel oder eine Kurbel darstellt.

3. Vorrichtung nach Anspruch 1 oder 2, **dadurch gekennzeichnet, dass** zum Einstellen eines Drehmomentes eine Ringmutter (18) an der Abtriebsnabe (14) angeordnet ist.

4. Vorrichtung nach einem der Ansprüche 1 bis 3, **dadurch gekennzeichnet, dass** zwischen Drehmomentkupplung (4) und Bremsspindel (3) eine Anzeigevorrichtung (5) angeordnet ist.

5. Vorrichtung nach Anspruch 4, **dadurch gekennzeichnet, dass** die Anzeigevorrichtung (5) aus einer bewegbaren Drehscheibe (20) an einer feststehenden Anzeigescheibe (22) besteht, wobei die Drehscheibe (20) von einem Seil (23) bewegt wird, welches mit der Abtriebsnabe (14) verbunden ist.

6. Vorrichtung nach Anspruch 5, **dadurch gekennzeichnet, dass** zwischen der Drehmomentkupplung (4) und dem Seil (23) eine Hebelübersetzung (26) angeordnet ist.

7. Vorrichtung nach Anspruch 5 oder 6, **dadurch gekennzeichnet, dass** zwischen der beweglichen Drehscheibe (20) und einem Lager (24) eine Feder (21) angeordnet ist.

8. Vorrichtung nach einem der Ansprüche 1 bis 7, **dadurch gekennzeichnet, dass** an der Drehmomentkupplung (4) eine Verriegelung (6) angeordnet ist.

9. Vorrichtung nach Anspruch 8, **dadurch gekennzeichnet, dass** die Anzeigevorrichtung (5) über ein Seil (23) mit der Verriegelung (6) verbunden ist.
